# EUROPÄISCHE PATENTSCHRIFT

(11) **EP 2 751 744 B1**
(45) Veröffentlichungstag und Bekanntmachung des Hinweises auf die Patenterteilung: **21.10.2015**
(21) Anmeldenummer: 12769037.8
(22) Anmeldetag: 30.08.2012
(51) Int. Cl.: G06K 13/07, B65G 47/248

(54) **WENDEVORRICHTUNG FÜR IDENTIFIKATIONSGEGENSTÄNDE**
METHOD FOR TURNING OVER IDENTIFICATION OBJECTS
DISPOSITIF DE RETOURNEMENT POUR OBJETS D'IDENTIFICATION

(30) Priorität: 02.09.2011 DE 102011112317
(43) Veröffentlichungstag der Anmeldung: 09.07.2014
(73) Patentinhaber: Mühlbauer GmbH & Co. KG, 93426 Roding (DE)
(72) Erfinder: KIRSCHBAUER, Maximilian, 93444 Bad Koetzting (DE)
(74) Vertreter: Schmidt, Steffen J.
(86) Internationale Anmeldenummer: PCT/EP2012/066817
(87) Internationale Veröffentlichungsnummer: WO 2013/030252

(56) Entgegenhaltungen:
- EP-A1- 0 132 393
- EP-A2- 0 838 782
- DE-A1- 10 317 984
- DE-A1- 19 709 561

## Beschreibung

### Technisches Gebiet

Es wird eine Vorrichtung zum Wenden von Identifikationsgegenständen beschrieben, welche ein Wenden mittels einer Aufnahmevorrichtung ermöglicht, in der die Identifikationsgegenstände gehalten werden. Identifikationsgegenstände umfassen unter anderem ID-Karten, Smart-Cards, sowie auch Sicherheitsdokumente, wie beispielsweise Ausweise.

### Hintergrund

Bei der Ver- und Bearbeitung von Identifikationsgegenständen befinden sich in einer Anlage zur Durchführung der Ver- und Bearbeitungsschritte Stationen, an welchen diese Schritte durchgeführt werden. Oftmals sind diese Stationen derart eingebaut bzw. ausgestaltet, dass eine Bearbeitung in nur einer Richtung an einer Seite der Identifikationsgegenstände erfolgt. Das bedeutet, dass Identifikationsgegenstände, welche auf einem Transportband diesen Stationen zugeführt werden, entweder auf ihrer Vorder- oder Rückseite bearbeitet werden können. Wird jedoch beabsichtigt die jeweils andere Seite zu bearbeiten, so müssen die Identifikationsgegenstände gedreht werden, um von diesen Stationen oder weiteren Stationen bearbeitet werden zu können.

Identifikationsgegenstände sind beispielsweise ID-Karten, welche sowohl auf der Vorderseite als auch auf der Rückseite personalisiert werden müssen, d.h. mit personenbezogenen Daten versehen werden, wie beispielsweise mit dem Namen, dem Bild und einer dieser Person zugehörigen Identifikationsnummer oder anderen Daten. Darüber hinaus können ID-Karten einen Chip und/oder Magnetstreifen aufweisen, welche entsprechend mit Daten versehen werden. Die ID-Karten werden dabei auf einem Transportband einer ersten Station zugeführt, in welcher zum Beispiel die Vorderseite mit dem Namen und dem Bild einer Person versehen wird. Zudem muss aber die Rückseite mit einer Identifikationsnummer bedruckt werden. Es ist durchaus möglich zwei, sich unter und über dem Transportband gegenüberliegende Druckstationen zur gleichzeitigen Bearbeitung von ID-Karten vorzusehen, wobei sowohl die Vorder- als auch die Rückseite mit den jeweiligen Informationen versehen werden. Jedoch würde eine solche Anlage wesentlich mehr Bauraum in Anspruch nehmen.

Ein weiterer Nachteil solcher Anordnungen besteht darin, dass während dem Aufbringen der personenspezifischen Informationen ein Druck auf die ID-Karte ausgeübt wird. Der Druck kann die ID-Karte aus ihrer Position auf dem Transportband bei dem Bedrucken von unten bringen. Dadurch würde sich eine ungenaue und/oder unvollständige Bedruckung der ID-Karte ergeben. Des Weiteren wäre es möglich, dass die ID-Karte sich durch das Bedrucken aus einer für die ID-Karte vorgesehen Ausnehmung auf dem Transportband bewegt und damit einen Stopp in der Bearbeitung bzw. dem Personalisierungsprozess und einen Schaden in der Anlage verursacht.

Auch ein gleichzeitiges Bedrucken von oben und unten um die Position der ID-Karte auf dem Transport sicherzustellen, kann zu einem ungenauen oder unvollständigen Personalisierungsergebnis führen. Es ist möglich, dass die ID-Karte durch den Druck, der durch die Druckstationen an verschiedenen Stellen der ID-Karte aufgebracht wird, um ein bestimmtes Maß verbogen wird.

Darüber hinaus werden oftmals Transportbänder verwendet, welche eine Ausnehmung für Identifikationsgegenstände aufweisen. So können sie innerhalb dieser Ausnehmung fest in Position gehalten werden. Durch die Schwerkraft kann ein Entfernen während dem Bedrucken von oben aufgrund der Positionierung auf dem Transportband ausgeschlossen werden.

Daher ist es jedoch notwendig, Identifikationsgegenstände während dem Personalisieren zu wenden, d.h. derart zu drehen, so dass sowohl die Vorder- als auch die Rückseite beispielsweise von oben bedruckt werden können.

### Stand der Technik

Bei herkömmlichen, aus der betrieblichen Praxis bekannten Vorrichtungen zum Personalisieren von Karten werden die Karten während der Personalisierung um 180° gedreht, d.h. von ihrer Vorderseite auf ihre Rückseite gewendet.

So ist beispielsweise auch eine Wendevorrichtung aus der betrieblichen Praxis bekannt, bei welcher eine Vielzahl von Schritten über verschiedene Komponenten ausgeführt werden, um eine Drehung eines Identifikationsgegenstands durchzuführen.

So wird beispielsweise eine Karte auf einem Transportband einer Wendevorrichtung zugeführt und das Transportband in einer Wendeposition angehalten. Dann wird eine Greifeinrichtung mit einem separaten Antrieb in eine Position zu der Karte gebracht. Die Greifeinrichtung greift die Karte, wobei über einen Kurzhubzylinder die Schließung und Öffnung von Greifelementen erfolgt. Danach wird die Greifeinrichtung über eine Hubeinrichtung mit einem separaten Hubantrieb in eine Position über dem Transportband gebracht. Der Abstand zwischen dem Transportband und der Position der nicht gedrehten Karte ist zumindest größer als die halbe Länge der Karte. Anschließend wird die Karte über einen Schwenkzylinder, der mir der Greifeinrichtung verbunden ist, um 180° gedreht. Nach dem Wenden der Karte wird die Karte in entsprechender Weise um 180° gewendet auf dem Transportband wieder abgelegt.

Es sind aber auch andere Wendevorrichtungen aus dem Stand der Technik bekannt.

So wird beispielsweise in DE 197 09 561 A1 eine Anlage zur Bearbeitung von Chip- und/oder Magnetstreifenkarten beschrieben, wobei eine Karte zum Beschriften der Rückseite in einer Transport- und Positioniervorrichtung gewendet werden kann. Die Transport- und Positioniervorrichtung weist eine Einrichtung zum Transport der Karten auf, welche mit einer Drehscheibe verbunden ist. Die Drehscheibe wird über einen Antriebsriemen von einem Antriebsmotor angetrieben, so dass die Einrichtung und damit die darin befindliche Karte gewendet werden kann.

EP 0 838 782 A2 beschreibt eine Vorrichtung zum Personalisieren von Identifikationskarten. Die Vorrichtung umfasst eine Wendestation mit zwei gegenüberliegenden Scheiben, die über Streben verbunden sind. Die Seitenwände weisen Führungen zum Führen von Karten und Walzenpaare zum Transport der Karten durch die Wendestation hindurch auf. Nachdem die Karte der Wendestation zugeführt wurde, wird die Wendestation um 180° gedreht, wobei währenddessen die Karte über die Walzenpaare durch die Wendestation transportiert wird. Ist die Wendestation um 180° gedreht, so wird die Karte über ein Walzenpaar von der Wendestation ausgegeben. In der Wendestation können zudem Kontaktiereinrichtungen zum Daten - Lesen / Beschreiben eines Chips der Karte vorgesehen sein.

DE 10 317 984 A1 beschreibt eine Vorrichtung zum Transportieren von Kreditkarten, die eine Wendevorrichtung aufweist. Die Wendevorrichtung ist auf einem Transferförderer angeordnet und ist dazu ausgebildet, einen Käfig mit einer Kreditkarte um eine Achse zu drehen, sodass diese von verschiedenen Seiten gelasert werden kann.

EP 0 132 393 A1 beschreibt eine Vorrichtung zum Lesen und Prüfen von Fahrkarten und Karten mit einem Lesekopf. Eine Karte, die in Bezug auf den Lesekopf falsch in die Vorrichtung eingeführt ist, wird mittels rotierenden Rollen um Rollen herum geführt und dadurch in Bezug auf den Lesekopf gewendet.

Bei derartigen Vorrichtungen besteht jedoch ein relativ großer Bedarf an Raum, der für diese Vorrichtungen zur Verfügung gestellt werden muss. Gerade bei Anlagen, welche ohnehin verschiedene Arbeiten ausführen und daher eine Vielzahl von Komponenten aufweisen, erweist sich die Bereitstellung eines großen Bauraums für eine einzelne Wendestation als nachteilig.

Dieser hohe Raumbedarf ergibt sich bei den Vorrichtungen aus dem Stand der Technik auch daher, dass diese eine Vielzahl von Komponenten, wie beispielsweise mehrere Antriebe oder eine relative große Drehscheibe mit einem Antriebsriemen, aufweisen.

Zudem bedarf es bei den bekannten Vorrichtungen mehrerer Schritte zum Ausführen des Wenden eines Identifikationsgegenstands bzw. einer Karte. Auch ist der Weg den der Identifikationsgegenstand bzw. die Karte während dem Wenden zurücklegen muss relativ groß, wodurch der benötigte Raum größer ist.

Darüber hinaus ist daher auch der Steuerungsaufwand erhöht.

Auch aufgrund obiger Nachteile ist der Durchsatz von Identifikationsgegenständen bzw. Karten limitiert. Weiterhin dauert ein Wendeprozess pro Identifikationsgegenstand bzw. Karte relativ lange, so dass der Wendestation nachgelagerte Bearbeitungsstationen in Abhängigkeit des Durchsatzes der Wendestation betrieben werden müssen. Dies ist im Hinblick auf Anlagen, in welchen mehrere Bearbeitungsschritte durchgeführt werden, äußerst nachteilig.

### Zugrunde liegende Aufgabe

Es ist daher Aufgabe eine Wendevorrichtung anzugeben, welche einen einfachen Aufbau aufweist, der wenig Raum in Anspruch nimmt und ein schnelles Wenden von Identifikationsgegenständen ermöglicht.

### Lösung

Eine diese Aufgabe lösende Vorrichtung zum Wenden von Identifikationsgegenständen weist eine Aufnahmevorrichtung mit einer Einrichtung zum Halten eines Identifikationsgegenstands auf, wobei die Aufnahmevorrichtung entlang einer Führung aus einer Ausgangstellung bewegbar ist. Weiter umfasst die Vorrichtung ein erstes Lager, welches in Bewegungsrichtung der Aufnahmevorrichtung an der Führung angeordnet ist, und ein erstes Abrollelement, welches drehbar an der Aufnahmevorrichtung aufgenommen ist. Dabei weist das erste Abrollelement eine Blockiervorrichtung auf, welche eine Drehung der Aufnahmevorrichtung mittels des ersten Abrollelements nur in einer ersten Richtung zulässt. Weiter weist die Vorrichtung einen Antrieb auf, der dazu ausgebildet ist die Aufnahmevorrichtung entlang der Führung zu bewegen. Nach einer Bewegung der Aufnahmevorrichtung aus der Ausgangstellung liegt das erste Abrollelement an dem ersten Lager an. Während einer Bewegung entlang des ersten Lagers mittels des Antriebs führt das erste Abrollelement eine Drehung in der ersten Richtung aus. Die Aufnahmevorrichtung führt dazu über das erste Abrollelement eine Drehung in der ersten Richtung aus. Während einer entgegengesetzten Bewegung der Aufnahmevorrichtung mittels des Antriebs führt das erste Abrollelement eine Drehung in einer der ersten Richtung entgegengesetzten zweiten Richtung aus, wobei die Blockiervorrichtung eine Drehung der Aufnahmevorrichtung verhindert.

Die Vorrichtung ermöglicht damit ein Wenden von Identifikationsgegenständen in einer sehr kurzen Zeit und benötigt lediglich einen Antrieb, um einen vollständigen Wendeprozess durchzuführen. Darüber hinaus weist die Vorrichtung nur wenige Komponenten auf und benötigt wenig Bauraum. Weiterhin wird der Identifikationsgegenstand nicht weit aus der Ausgangstellung entfernt, wodurch der benötigte Raum ebenfalls reduziert ist.

### Vorteile und Ausgestaltungen

Durch das Bewegen der Aufnahmevorrichtung entlang des ersten Lagers und über den Kontakt des ersten Abrollelements mit dem ersten Lager ergibt sich eine einfache Drehung eines Identifikationsgegenstands. Je nach Länge des ersten Lagers und Weg, welchen die Aufnahmevorrichtung entlang der Führung zurücklegt, kann natürlich eine beliebige Drehung des Identifikationsgegenstands erfolgen. D.h. der Identifikationsgegenstand kann nicht nur gewendet werden, d.h. um 180° gedreht, sondern beispielsweise um 45° oder um 360° gedreht werden. Dies eignet sich zum Beispiel zur vollständigen Prüfung eines Identifikationsgegenstands (jede Seite eines Identifikationsgegenstands) mittels einer optischen Überprüfungseinrichtung.

Die Ausgestaltung des ersten Abrollelements, zum Beispiel die Größe bzw. der Umfang, können derart gewählt werden, so dass sich eine bestimmte Drehung des ersten Abrollelements und damit der Aufnahmevorrichtung ergibt. Dabei wird das Maß beeinflusst, um welches die Aufnahmevorrichtung gedreht wird. Zusätzlich zu der Blockiervorrichtung kann das erste Abrollelement ein Getriebe aufweisen, wie beispielsweise ein Planetengetriebe, um das Maß der Drehung der Aufnahmevorrichtung zu beeinflussen.

Darüber hinaus kann die Führung auf Höhe des ersten Lagers ein zweites Lager, das dem ersten Lager versetzt gegenüberliegt, und die Aufnahmevorrichtung ein zweites Abrollelement aufweisen, welches drehbar an der Aufnahmevorrichtung gelagert ist. Das zweite Abrollelement weist eine Blockiervorrichtung auf, welche lediglich eine Drehung der Aufnahmevorrichtung mittels des zweiten Abrollelements in der ersten Richtung zulässt. Dabei wird ein Identifikationsgegenstand mittels des ersten Abrollelements um 90° gedreht und mittels des zweiten Abrollelements um weitere 90° gedreht. Da das Wenden des Identifikationsgegenstands um 180° über zwei Abrollelemente erfolgt, muss die Aufnahmevorrichtung von dem Antrieb nur um die Hälfte des Weges im Gegensatz zu einer Vorrichtung mit nur einem Abrollelement bewegt werden. Jedes der Abrollelemente bewirkt bei einer Drehung eine Drehung der Aufnahmevorrichtung in der ersten Richtung. Um dies zu erreichen liegen sich das erste und zweite Lager versetzt zueinander gegenüber, so dass das erste und zweite Abrollelement eine Drehung der Aufnahmevorrichtung in der ersten Richtung sowohl bei dem Bewegen der Aufnahmevorrichtung aus der Ausgangsstellung als auch beim Bewegen der Aufnahmevorrichtung in die Ausgangsstellung bewirken. Daher reduziert sich weiter der benötigte Raum für die Vorrichtung und für das Wenden eines Identifikationsgegenstands. Weiter wird auch die Wendezeit reduziert, da die Aufnahmevorrichtung um einen geringeren Weg in der Führung bewegt werden muss und bei dem Zurückbewegen der Aufnahmevorrichtung ein Teil des Wendens erfolgt.

Die Ausgestaltung des zweiten Abrollelements kann der des ersten Abrollelements entsprechen.

Der Antrieb kann als Hydraulikzylinder, als Pneumatikzylinder oder als Linearantrieb ausgebildet sein. Des Weiteren kann der Antrieb auch mittels anderer Einrichtungen bereitgestellt werden. Beispielhaft sei ein Elektromotor genannt, der direkt oder indirekt über weitere Mittel eine Bewegung der Aufnahmevorrichtung entlang der Führung bewirkt. Beispielsweise kann der Linearantrieb mittels eines Ritzels und einer Zahnstange den Antrieb der Aufnahmevorrichtung bereitstellen.

Das erste und/oder zweite Lager und/oder das erste und/oder zweite Abrollelement können gummiert sein. Dadurch wird die für die Drehung benötigte Reibung zwischen Abrollelement und Lager sichergestellt, wodurch eine entsprechende Drehung der Abrollelemente und der Aufnahmevorrichtung erreicht wird. Das oder die Lager bzw. das oder die Abrollelement(e) können auch mit einem anderen, eine entsprechende Reibung erzeugenden Material oder anderweitig beschichtet sein, um eine entsprechende Reibung und Drehung zu gewährleisten. Zudem kann es ausreichend sein, jeweils nur die Abrollelemente oder die Lager mit einem Material oder anderweitig beschichtet auszuführen.

Alternativ können das erste und/oder zweite Lager als Zahnstange und das erste und/oder zweite Abrollelement als Zahnräder ausgebildet sein. Damit wird eine definierte Drehung der Abrollelemente sichergestellt. Auch in der Ausgestaltung als Zahnräder weisen das erste und das zweite Abrollelement eine Blockiervorrichtung auf, so dass eine Drehung der Aufnahmevorrichtung mittels der Abrollelemente in nur jeweils einer Richtung möglich ist. Zudem ermöglicht die Ausgestaltung der Abrollelemente oder des Abrollelements je nach Wahl des Zahnrads, eine Beeinflussung des Maßes, um welches die Aufnahmevorrichtung gedreht wird. Beispielsweise können die Größe und/oder Anzahl der Zähne bzw. Zahnung variiert werden. Ebenso kann durch die Ausgestaltung der Zahnstange(n) in entsprechender Weise das Maß der Drehung beeinflusst werden.

Die Blockiervorrichtung des ersten und/oder zweiten Abrollelements kann einen Freilauf aufweisen. Der Freilauf lässt lediglich eine Drehung der Aufnahmevorrichtung, die mit dem Freilauf verbunden ist, über das erste und/oder das zweite Abrollelement in nur einer Richtung zu. Andere Vorrichtungen zum Blockieren der Abrollelemente in einer Richtung können jedoch ebenso verwendet werden.

Die Identifikationsgegenstände können von einer Transporteinrichtung zugeführt werden. Die Identifikationsgegenstände liegen beispielsweise auf einem Transportband auf, wobei das Transportband so ausgebildet ist, dass es Aufnahmebereiche für Identifikationsgegenstände definiert.

Die Einrichtung zum Halten des Identifikationsgegenstands kann in Transportrichtung der Identifikationsgegenstände zwei hintereinander angeordnete Paare gegenüberliegender Rollen aufweisen. Diese sind dazu ausgebildet, einen Identifikationsgegenstand federnd zwischen sich aufzunehmen. Dadurch ist es möglich, dass ein Identifikationsgegenstand zu der Einrichtung befördert und zwischen die Rollenpaare geschoben werden kann. Die Einrichtung behindert damit den Transport bzw. die Beförderung von Identifikationsgegenständen nicht. Befindet sich ein Identifikationsgegenstand zwischen den Rollenpaaren und wird nicht weiter bewegt, so bewirken die federnd gelagerten bzw. wirkenden Rollen, dass der Identifikationsgegenstand von diesen in Position gehalten wird.

In weiteren Ausführungen der Vorrichtung können das erste und/oder zweite Lager derart an der Führung angeordnet sein, dass das erste und/oder zweite Abrollelement erst dann an dem ersten und/oder zweiten Lager anliegen, nachdem die Aufnahmevorrichtung um ein bestimmtes Maß aus der Ausgangstellung bewegt worden ist. Damit wird verhindert, dass durch ein zu frühes Drehen eines Identifikationsgegenstands der Identifikationsgegenstand beispielsweise mit einer Transporteinrichtung kollidiert und das Wenden behindert wird.

Das erste und/oder zweite Lager kann/können zudem als Leiste ausgebildet sein, welche(s) entlang der Bewegungsrichtung der Aufnahmevorrichtung an der Führung angeordnet ist/sind.

In manchen Ausführungen der Vorrichtung kann ein Abstand zwischen dem ersten und/oder dem zweiten Lager und dem ersten und/oder dem zweiten Abrollelement einstellbar sein. Dabei können an der Führung weitere Einrichtungen, zum Beispiel Gewindestifte, vorgesehen sein, die es ermöglichen den Abstand zu verändern. Dazu ist/sind das erste und/oder zweite Lager derart an der Führung gelagert, dass es/sie senkrecht zu der Bewegungsrichtung der Aufnahmevorrichtung verlagert werden kann/können.

Weiterhin können das erste Abrollelement und das zweite Abrollelement eine gemeinsame Drehachse aufweisen.

### Kurze Beschreibung der Zeichnungen

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und / oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Fig. gezeigten Komponenten sind hierbei nicht unbedingt maßstäblich; sie können bei zu implementierenden Ausführungsformen vom Veranschaulichten abweichen.
- Fig. 1a: zeigt eine schematische Vorderansicht einer Vorrichtung zum Wenden von Identifikationsgegenständen und einer Transporteinrichtung;
- Fig. 1b: zeigt eine schematische Rückansicht einer Vorrichtung zum Wenden von Identifikationsgegenständen und einer Transporteinrichtung;
- Fig. 1c: zeigt eine schematische Draufsicht einer Vorrichtung zum Wenden von Identifikationsgegenständen und einer Transporteinrichtung;
- Fig. 2a - 2h: zeigen schematisch die Funktionsweise einer Vorrichtung zum Wenden von Identifikationsgegenständen; und
- Fig. 3: zeigt schematisch ein verstellbares Lager einer Vorrichtung zum Wenden von Identifikationsgegenständen.

### Ausführliche Beschreibung der Ausführungsbeispiele

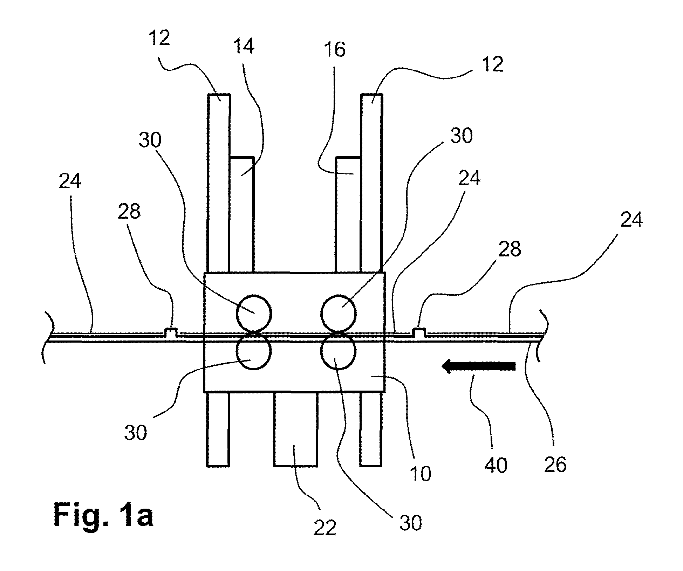

Fig. 1a zeigt eine schematische Vorderansicht einer Vorrichtung zum Wenden von Identifikationsgegenständen und einer Transporteinrichtung zum Zu- und Abführen von Identifikationsgegenständen, wobei nachfolgend von einer Wendevorrichtung gesprochen wird. Zudem werden im Folgenden Wendevorrichtungen für Karten beschrieben, wobei die Karten nur als ein Beispiel für Identifikationsgegenstände zu sehen sind und die gezeigten Wendevorrichtungen gleichwohl für Identifikationsgegenstände jeglicher Art verwendet werden können.

Die in Fig. 1a gezeigte Wendevorrichtung weist eine Führung 12 auf, welche in dem gezeigten Beispiel aus zwei gegenüberliegenden Teilen besteht. An dem in Fig. 1a auf der linken Seite dargestellten Teil der Führung 12 ist ein erstes Lager 14 und an dem in Fig. 1a auf der rechten Seite dargestellten Teil der Führung 12 ist ein zweites Lager 16 angebracht.

An der Führung 12 ist eine Aufnahmevorrichtung 10 für als Karten ausgestaltete Identifikationsgegenstände 24 angebracht, welche entlang der Führung 12 über einen Antrieb 22 bewegt werden kann. Der Antrieb 22 ist in dieser Ausführungsform als Pneumatikzylinder ausgebildet und weist noch ein Antriebsteil 32 (in Fig. 1a nicht dargestellt) auf, welches zur Bewegung der Aufnahmevorrichtung 10 dient. Die Führung 12 ist zum Führen der Aufnahmevorrichtung 10 ausgebildet und weist daher auch Mittel zum Führen auf. Dazu kann die Führung 12 eine Führungsnut (nicht dargestellt) und die Aufnahmevorrichtung 10 eine entsprechende Ausgestaltung aufweisen, so dass die Aufnahmevorrichtung 10 in der Führungsnut der Führung 12 geführt wird.

An der Aufnahmevorrichtung 10 sind auch ein erstes und ein zweites Abrollelement 18 und 20 (in Fig. 1a nicht dargestellt) angebracht. Das erste und zweite Abrollelement 18 und 20 weisen eine Blockiervorrichtung auf, die eine Übertragung einer Drehbewegung des ersten oder zweiten Abrollelements 18, 20 auf die Aufnahmevorrichtung 10 in jeweils nur einer Richtung zulassen.

An der Aufnahmevorrichtung 10 befindet sich weiter eine Einrichtung zum Halten von Identifikationsgegenständen (Karten) 24, welche in dem hier gezeigten Ausführungsbeispiel aus zwei Paaren von gegenüberliegenden Rollen 30 ausgebildet ist. Die Rollen 30 sind federnd gelagert, so dass Karten 24 in Transportrichtung (dargestellt durch Pfeil 40) zu der Aufnahmevorrichtung 10 über eine Transporteinrichtung 26 bewegt werden können. Wenn die Transporteinrichtung 26 in einer Aufnahmeposition angehalten wird, in welcher die Aufnahmevorrichtung 10 die Karten 24 aufnimmt, so ist die von den federnd gelagerten und auf die sich in der Aufnahmeposition gelagerte Karte 24 wirkende und über die Rollen 30 aufgebrachte Kraft ausreichend, um den Identifikationsgegenstand / die Karte 24 fest zu halten.

Die Transporteinrichtung 26 weist Erhebungen 28 auf, die dazu dienen Aufnahmebereiche für Karten 24 zu definieren. Dabei ist der Abstand zwischen zwei Erhebungen in Transportrichtung so groß gewählt, dass ein Identifikationsgegenstand / eine Karte 24 dort eine definierte Position und Ausrichtung einnimmt. Durch die Erhebungen 28 wird ebenso die Mitnahme von Identifikationsgegenständen / Karten 24 aus einer Aufnahmeposition, in welcher die Rollen 30 den Identifikationsgegenstand / die Karte 24 mittels einem zwischen den Rollen 30 herrschenden Druck lagern, und das Transportieren in die Aufnahmeposition erleichtert. Die Erhebungen 28 "schieben" somit den Identifikationsgegenstand / die Karte 24 durch die Rollen 30. Ein/e Identifikationsgegenstand / Karte 24 verbleibt nur in der Aufnahmeposition und wird von den Rollen 30 fest gehalten, wenn der Transport der Identifikationsgegenstände / Karten 24 zumindest lokal in der Aufnahmeposition angehalten wird.

Darüber hinaus weist die Wendevorrichtung noch weitere Komponenten und Bestandteile auf, welche aus Gründen der Übersichtlichkeit weggelassen wurden. So kann beispielsweise eine Wendevorrichtung Sensoren zur Erfassung der Position der Identifikationsgegenstände / Karten 24, des ersten und zweiten Abrollelements 18 und 20 sowie der Aufnahmevorrichtung 10 aufweisen.

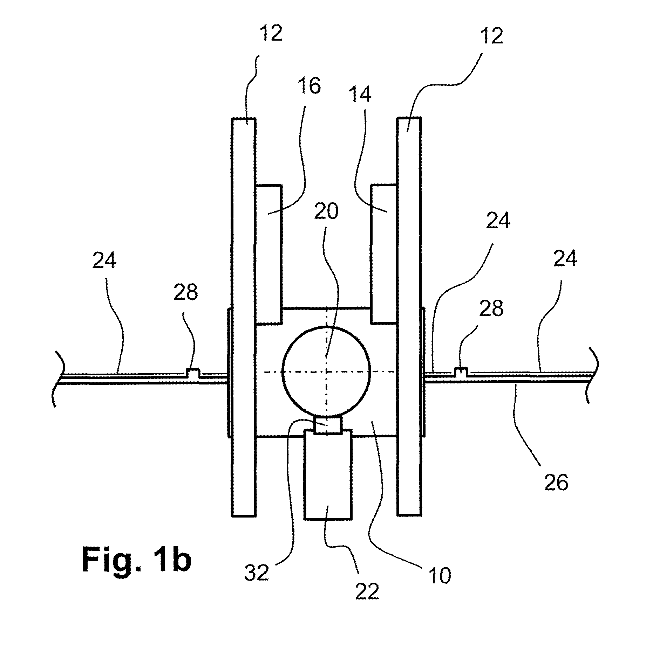

Fig. 1b zeigt eine schematische Rückansicht einer Wendevorrichtung und einer Transporteinrichtung 26 zum Zu- und Abführen von Identifikationsgegenständen / Karten 24. Die Wendevorrichtung und die Transporteinrichtung 26 entsprechen dem Aufbau der Wendevorrichtung von Fig. 1a, wobei in Fig. 1b das zweite Abrollelement 20 dargestellt ist. Das erste Abrollelement 18 ist in Fig. 1b hinter dem zweiten Abrollelement 20 angeordnet und daher in Fig. 1b nicht dargestellt.

Weiterhin ist ein Antriebsteil 32 dargestellt, welches mit dem Antrieb 22 verbunden ist und dazu dient, die Aufnahmevorrichtung 10 entlang der Führung 12 zu bewegen.

Das zweite Abrollelement 20 liegt nach einer Bewegung der Aufnahmevorrichtung 10 aus einer Ausgangsstellung an dem zweiten Lager 16 an. In der Ausgangsstellung ist die Aufnahmevorrichtung 10 derart positioniert, dass ihr über die Transporteinrichtung 26 Identifikationsgegenstände / Karten 24 zugeführt werden können. In dem gezeigten Ausführungsbeispiel weisen das erste und zweite Abrollelement 18 und 20 eine Gummierung zur Sicherstellung einer ausreichenden Reibung für die Erzielung einer Drehbewegung auf.

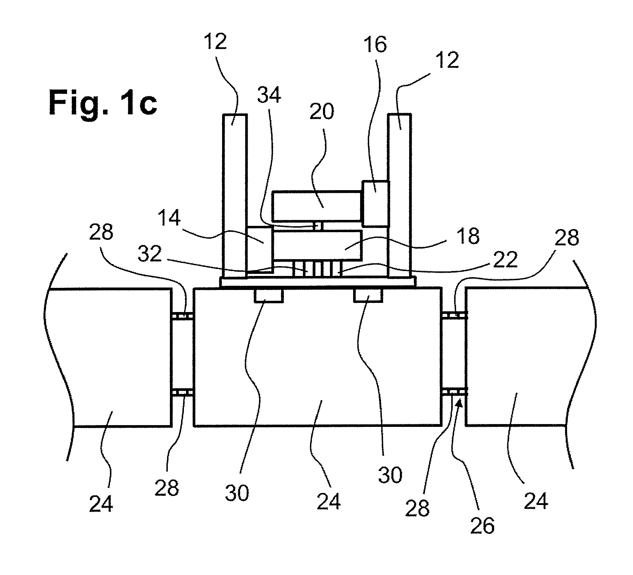

Fig. 1c zeigt eine schematische Draufsicht auf eine Wendevorrichtung zum Wenden von Karten 24 und eine Transporteinrichtung 26. Die in Fig. 1c gezeigte Wendevorrichtung und Transporteinrichtung 26 entsprechen dem Aufbau der Wendevorrichtungen von Fig. 1a und Fig. 1b.

In Fig. 1c ist die Anordnung des ersten und zweiten Lagers 14 und 16 sowie die Anordnung des ersten und zweiten Abrollelements 18 und 20 zu sehen. Wie in den Fig. 1a und 1b dargestellt, befinden sich das erste und zweite Lager 14, 16 im Wesentlichen auf der gleichen Höhe und weisen eine gleiche Ausdehnung auf. Jedoch sind das erste und zweite Lager 14, 16 versetzt zu einander angeordnet, so dass sie sich nicht direkt gegenüberliegen. Dementsprechend sind die zugehörigen Abrollelemente 18, 20 derart angeordnet, dass das erste Abrollelement 18 an dem ersten Lager 14 anliegen kann und das zweite Abrollelement 20 an dem zweiten Lager 16 anliegen kann. Das erste und zweite Abrollelement 18, 20 sind derart an der Aufnahmevorrichtung 10 angebracht, dass bei einer Drehung des ersten Abrollelements 18 in einer ersten Richtung aufgrund des Kontakts mit dem ersten Lager 14 durch eine Bewegung der Aufnahmevorrichtung 10 mittels des Antriebs 22 und des Antriebsteils 32, die Aufnahmevorrichtung 10 ebenfalls eine Drehung in der ersten Richtung ausführt und dabei die Karte 24 dreht. Wird jedoch die Aufnahmevorrichtung 10 wieder zurück in ihre Ausgangsstellung bewegt, führt das erste Abrollelement 18 aufgrund des Kontakts mit dem ersten Lager 14 eine Drehung in einer der ersten Richtung entgegengesetzten zweiten Richtung aus. Jedoch verhindert die Blockiervorrichtung des ersten Abrollelements 18 eine Drehung der Aufnahmevorrichtung 10 in der zweiten Richtung.

Entsprechend führt das zweite Abrollelement 20 eine Drehung aufgrund des Kontakts mit dem zweiten Lager 16 aus, wenn die Aufnahmevorrichtung 10 aus ihrer Ausgangsstellung mittels des Antriebs 22 und des Antriebsteils 32 bewegt wird. Die Aufnahmevorrichtung 10 führt aber durch die Blockiervorrichtung des zweiten Abrollelements 20 keine Drehung aus. Wird die Aufnahmevorrichtung 10 wieder zurück in ihre Ausgangsstellung bewegt, führt das zweite Abrollelement 20 eine Drehung aus und die Aufnahmevorrichtung 10 führt ebenfalls eine entsprechende Drehung aus.

Die Welle 34 ist in Fig. 1c nur gezeigt, um darstellen, dass das erste und zweite Abrollelement 18 und 20 mit der Aufnahmevorrichtung 10 verbunden sind. Je nach Ausgestaltung der Blockiervorrichtungen des ersten und zweiten Abrollelements 18, 20 kann eine einzige, fest mit der Aufnahmevorrichtung 10 verbundene Welle vorgesehen sein. In einer nicht dargestellten Ausführung sind die Abrollelemente 18, 20 auf einer gemeinsamen ersten Welle angeordnet, wobei die erste Welle über einen Zahnriemen mit einer zweiten Welle, einem Zahnrad oder dergleichen mit der Aufnahmevorrichtung 10 verbunden ist. D.h. führt die erste Welle eine Drehung aus, so wird auch die Aufnahmevorrichtung 10 in entsprechender Weise gedreht. Jedoch bewirken die Blockiervorrichtungen des ersten und zweiten Abrollelements 18, 20, dass das erste Abrollelement 18 eine Drehbewegung auf die erste Welle bei einer Drehung in einer ersten Richtung überträgt, und bei einer Drehung in einer zweiten Richtung keine Drehbewegung auf die erste Welle überträgt. Das zweite Abrollelement 20 überträgt eine Drehbewegung auf die erste Welle ebenso bei einer Drehung in der ersten Richtung und keine Drehbewegung auf die erste Welle bei einer Drehung in der zweiten Richtung. Dabei können die Blockiervorrichtungen als Freilauf ausgebildet sein.

Da die Lager 14, 16 versetzt zueinander gegenüberliegen, bewirkt das erste Abrollelement 18 lediglich eine Drehung der Aufnahmevorrichtung 10 bei einer Bewegung der Aufnahmevorrichtung 10 aus der Ausgangsstellung und das zweite Abrollelement 20 lediglich eine Drehung der Aufnahmevorrichtung 10 bei einer Bewegung der Aufnahmevorrichtung 10 in die Ausgangstellung.

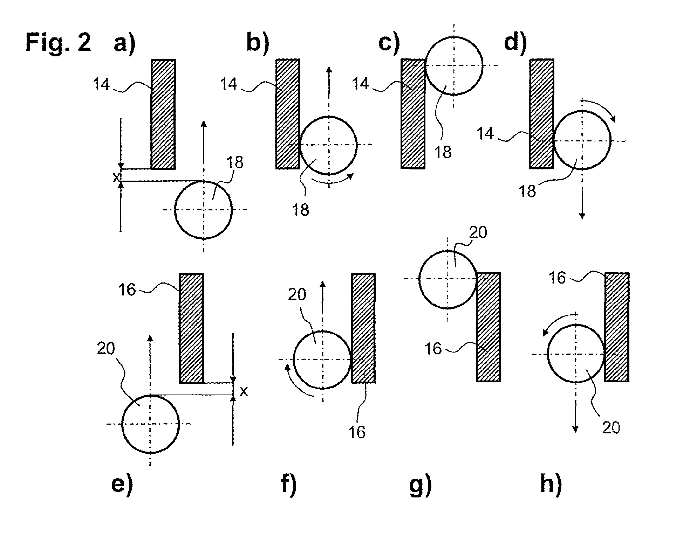

Fig. 2 zeigt schematisch die Funktionsweise einer Wendevorrichtung. Fig. 2a) bis d) zeigen dabei das erste Abrollelement 18 und das erste Lager 14, und Fig. 2e) bis h) zeigen das zweite Abrollelement 20 und das zweite Lager 16.

In Fig. 2a) befinden sich das erste Abrollelement 18 und die damit verbundene Aufnahmevorrichtung 10 in der Ausgangstellung. Das erste Abrollelement 18 wird dann über die Bewegung der Aufnahmevorrichtung 10 mittels des Antriebs 22 und des Antriebsteils 32 in Richtung des Pfeils parallel zu dem ersten Lager 14 in Richtung des ersten Lagers 14 verschoben. Das erste Abrollelement 18 ist in der Ausgangstellung der Aufnahmevorrichtung 10 um ein bestimmtes Maß x von dem ersten Lager 14 beabstandet.

Das erste Abrollelement 18 liegt an dem ersten Lager 14 an, wie in Fig. 2b) gezeigt, nachdem das erste Abrollelement 18 um ein bestimmtes Maß x aus der Ausgangsstellung der Aufnahmevorrichtung 10 aufgrund der Bewegung der Aufnahmevorrichtung 10 bewegt worden ist. Da das erste Abrollelement 18 weiter in Richtung des Pfeils bewegt wird, führt das erste Abrollelement 18 eine Drehbewegung in der ersten Richtung aus, wie durch den Pfeil angedeutet. Aufgrund der Verbindung von erstem Abrollelement 18 und Aufnahmevorrichtung 10 führt die Aufnahmevorrichtung 10 ebenfalls eine Drehbewegung in der ersten Richtung aus, entsprechend der Drehbewegung des ersten Abrollelements 18. Die Drehung der Aufnahmevorrichtung 10 in der ersten Richtung wird durch die Blockiervorrichtung des ersten Abrollelements 18 zugelassen. Die Bewegung der Aufnahmevorrichtung 10 erfolgt dabei über den in Fig. 2 nicht dargestellten Antrieb 22 und das nicht dargestellte Antriebsteil 32.

In Fig. 2c) befindet sich das erste Abrollelement 18 in seiner obersten Stellung an dem ersten Lager 14, wobei die Aufnahmevorrichtung 10 und die durch die Aufnahmevorrichtung 10 gehaltene Karte 24 dabei um 90° gedreht sind.

Wird die Aufnahmevorrichtung 10 mittels des Antriebs 22 und des Antriebsteils 32 wieder zurück in die Ausgangsstellung der Aufnahmevorrichtung 10 bewegt, führt das erste Abrollelement 18 eine Drehbewegung in einer zweiten Richtung aus. Jedoch verhindert die Blockiervorrichtung des ersten Abrollelements 18 eine Drehung der Aufnahmevorrichtung 10, so dass diese nicht wieder zurück in ihre ursprüngliche Ausrichtung vor der Drehung um 90° gedreht wird.

Fig. 2e) zeigt das zweite Abrollelement 20 in der Ausgangstellung der Aufnahmevorrichtung 10 und das zweite Lager 16, wobei das zweite Abrollelement 20 mit der Aufnahmevorrichtung 10 verbunden ist. Das zweite Abrollelement 20 ist in der Ausgangstellung der Aufnahmevorrichtung 10 um ein bestimmtes Maß x von dem zweiten Lager 16 beabstandet.

Während die Aufnahmevorrichtung 10 über den Antrieb 22 und das Antriebsteil 32 nach oben bewegt wird und die Aufnahmevorrichtung 10 über das erste Abrollelement 18 eine Drehung in der ersten Richtung ausführt, führt das zweite Abrollelement 20, nachdem es an dem zweiten Lager 16 anliegt, eine Drehbewegung in der zweiten Richtung aus, wie in Fig. 2f) dargestellt. Jedoch verhindert die Blockiervorrichtung des zweiten Abrollelements 20, eine Übertragung der Drehbewegung des zweiten Abrollelements 20 auf die Aufnahmevorrichtung 10.

In Fig. 2g) befindet sich das zweite Abrollelement 20 in seiner obersten Stellung an dem zweiten Lager 16. Die Aufnahmevorrichtung 10 und die in der Aufnahmevorrichtung 10 befindliche Karte 24 sind dabei über das erste Abrollelement 18 um 90° gedreht.

Während bei der Bewegung der Aufnahmevorrichtung 10 über den Antrieb 22 und das Antriebsteil 32 zurück in die Ausgangstellung die Aufnahmevorrichtung 10 mittels des ersten Abrollelements 18 keine Drehbewegung ausführt, wird die Aufnahmevorrichtung 10 in der ersten Richtung über das zweite Abrollelement 20 um weitere 90° gedreht, wie in Fig. 2h) gezeigt.

Nachdem sich die Aufnahmevorrichtung 10 wieder in ihrer Ausgangstellung befindet, sind die Aufnahmevorrichtung 10 und die darin gehaltene Karte 24 um 180° gedreht.

Durch das Zusammenspiel des ersten und zweiten Abrollelements 18, 20 erfolgt bei einem kurzem Weg ein Wenden von Identifikationsgegenständen / Karten 24, d.h. eine Drehung von Identifikationsgegenständen / Karten 24 um 180°.

Sowohl ein Herausfahren von Identifikationsgegenständen / Karten 24 aus Aufnahmebereichen der Transporteinrichtung 26 als auch das Wenden der Identifikationsgegenstände / Karten 24 erfolgt bei dem dargestellten Ausführungsbeispiel durch lediglich einen Antrieb, welcher die Aufnahmevorrichtung 10 linear bewegt.

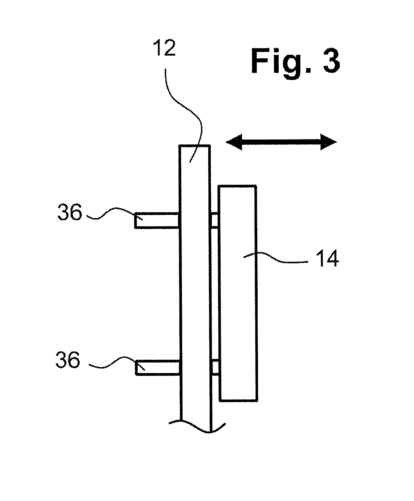

Fig. 3 zeigt schematisch ein verstellbares Lager einer Wendevorrichtung. Über Gewindestifte 36 ist das erste Lager 14 relativ zu einem Teil der Führung 12 bewegbar (dargestellt durch den schwarzen Doppelpfeil), um den Abstand zwischen dem ersten Lager 14 und dem ersten Abrollelement 18 zu verändern. Auch das zweite Lager 16 kann über Gewindestifte 36 relativ zu einem Teil der Führung 12 und damit auch zu dem zweiten Abrollelement 20 bewegbar sein. In dem hier gezeigten Ausführungsbeispiel werden Gewindestifte 36 verwendet, wobei auch andere Mittel zum Ändern der Abstände denkbar sind. Eine Veränderung des Abstands ist beispielsweise dann erforderlich, wenn eine Gummierung eines Abrollelements abnutzungsbedingt schwächer wird und sich daher auch der Durchmesser eines Abrollelements verringert oder die Drehung der Abrollelemente 18, 20 nicht mehr dem gewünschten Maß entspricht. Die Gewindestifte 36 dienen daher zum Einstellen der Andrückkraft der Leisten 14, 16 an die Abrollelemente 18, 20.

## Patentansprüche

1. Vorrichtung zum Wenden von Identifikationsgegenständen (24), umfassend
eine Aufnahmevorrichtung (10) mit einer Einrichtung zum Halten eines Identifikationsgegenstands (24), wobei die Aufnahmevorrichtung (10) entlang einer Führung (12) aus einer Ausgangstellung bewegbar ist,
ein erstes Lager (14), welches in Bewegungsrichtung der Aufnahmevorrichtung (10) an der Führung (12) angeordnet ist,
ein erstes Abrollelement (18), welches drehbar an der Aufnahmevorrichtung (10) aufgenommen ist, wobei das erste Abrollelement (18) eine Blockiervorrichtung aufweist, welche eine Drehung der Aufnahmevorrichtung (10) mittels des ersten Abrollelements (18) nur in einer ersten Richtung zulässt,
einen Antrieb (22, 32), der dazu ausgebildet ist die Aufnahmevorrichtung (10) entlang der Führung (12) zu bewegen,
wobei nach Bewegung der Aufnahmevorrichtung (10) aus der Ausgangstellung das erste Abrollelement (18) an dem ersten Lager (14) anliegt und wobei das erste Abrollelement (18) während einer Bewegung entlang des ersten Lagers (14) mittels des Antriebs (22, 32) eine Drehung in der ersten Richtung und die Aufnahmevorrichtung (10) über das erste Abrollelement (18) eine Drehung in der ersten Richtung ausführt, und wobei das erste Abrollelement (18) während einer entgegengesetzten Bewegung der Aufnahmevorrichtung (10) mittels des Antriebs (22, 32) eine Drehung in einer der ersten Richtung entgegengesetzten zweiten Richtung ausführt, wobei die Blockiervorrichtung eine Drehung der Aufnahmevorrichtung (10) verhindert.

2. Vorrichtung nach Anspruch 1, wobei die Führung (12) auf Höhe des ersten Lagers (14) ein zweites Lager (16) aufweist, das dem ersten Lager (14) versetzt gegenüberliegt, und die Aufnahmevorrichtung (10) ein zweites Abrollelement (20) aufweist, welches drehbar an der Aufnahmevorrichtung (10) gelagert ist, wobei das zweite Abrollelement (20) eine Blockiervorrichtung aufweist, welche lediglich eine Drehung der Aufnahmevorrichtung (10) mittels des zweiten Abrollelements (20) in der ersten Richtung zulässt.

3. Vorrichtung nach einem der vorhergehenden Ansprüche, wobei der Antrieb (22, 32) ein Hydraulikzylinder, ein Pneumatikzylinder oder ein Linearantrieb ist.

4. Vorrichtung nach einem der vorhergehenden Ansprüche, wobei das erste Lager (14) und/oder das zweite Lager (16) gummiert ist.

5. Vorrichtung nach einem der vorhergehenden Ansprüche, wobei das erste Abrollelement (18) und/oder das zweite Abrollelemente (20) gummiert ist.

6. Vorrichtung nach einem der vorhergehenden Ansprüche, wobei das erste Lager (14) und/oder das zweite Lager (16) eine Zahnstange ist und das erste Abrollelement (18) und/oder das zweite Abrollelement (20) ein Zahnrad ist.

7. Vorrichtung nach einem der vorhergehenden Ansprüche, wobei die Blockiervorrichtung des ersten Abrollelements (18) einen Freilauf aufweist.

8. Vorrichtung nach einem der vorhergehenden Ansprüche, wobei die Blockiervorrichtung des zweiten Abrollelements (20) einen Freilauf aufweist.

9. Vorrichtung nach einem der vorhergehenden Ansprüche, wobei die Identifikationsgegenstände (24) von einer Transporteinrichtung (26) zugeführt werden.

10. Vorrichtung nach einem der vorhergehenden Ansprüche, wobei die Einrichtung zum Halten des Identifikationsgegenstands (24) zwei Paare gegenüberliegender Rollen (30) aufweist, die dazu ausgebildet sind, einen Identifikationsgegenstand (24) federnd zwischen sich aufzunehmen.

11. Vorrichtung nach einem der vorhergehenden Ansprüche, wobei das erste Lager (14) derart an der Führung (12) angeordnet ist, dass das erste Abrollelement (18) erst dann an dem ersten Lager (14) anliegt, nachdem die Aufnahmevorrichtung (10) um ein bestimmtes Maß aus der Ausgangstellung bewegt worden ist.

12. Vorrichtung nach einem der vorhergehenden Ansprüche, wobei das zweite Lager (16) derart an der Führung (12) angeordnet ist, dass das zweite Abrollelement (20) erst dann an dem zweiten Lager (16) anliegt, nachdem die Aufnahmevorrichtung (10) um ein bestimmtes Maß aus der Ausgangstellung bewegt worden ist.

13. Vorrichtung nach einem der vorhergehenden Ansprüche, wobei das erste Lager (14) und/oder das zweite Lager (16) als Leiste ausgebildet ist, welche entlang der Bewegungsrichtung der Aufnahmevorrichtung (10) an der Führung (12) angeordnet ist.

14. Vorrichtung nach einem der vorhergehenden Ansprüche, wobei ein Abstand zwischen dem ersten Lager (14) und dem ersten Abrollelement (18) und/oder ein Abstand zwischen dem zweiten Lager (16) und dem zweiten Abrollelement (20) einstellbar ist.

15. Vorrichtung nach einem der vorhergehenden Ansprüche, wobei das erste (18) und das zweite Abrollelement (20) eine gemeinsame Drehachse aufweisen.

## Claims

1. A device for turning over identification objects (24), comprising:
- a receiving device (10) including a device for holding an identification object (24), wherein the receiving device (10) can be moved from an initial position along a guide (12),
- a first bearing (14), which is arranged on the guide (12) in the direction of movement of the receiving device (10),
- a first rolling element (18), which is rotatably received in the receiving device (10), wherein the first rolling element (18) comprises a blocking device, which permits rotation of the receiving device (10) in a first direction only by means of the first rolling element (18),
- a drive (22, 32), which is adapted to move the receiving device (10) along the guide (12),
- wherein, after movement of the receiving device (10) from the initial position, the first rolling element (18) contacts the first bearing (14), and wherein, during movement along the first bearing (14) by means of the drive (22, 32), the first rolling element (18) performs a rotation in the first direction and the receiving device (10) performs a rotation in the first direction via the first rolling element (18), and wherein, during an opposite movement of the receiving device (10) by means of the drive (22, 32), the first rolling element (18) performs a rotation in a second direction opposite to the first direction, wherein the blocking device prevents rotation of the receiving device (10).

2. The device according to claim 1, wherein the guide (12) comprises a second bearing (16), located at the level of the first bearing (14), which is opposite to the first bearing (14) in an offset manner, and the receiving device (10) comprises a second rolling element (20), which is rotatably mounted to the receiving device (10), wherein the second rolling element (20) comprises a blocking device, which only permits rotation of the receiving device (10) in the first direction by means of the second rolling element (20).

3. The device according to any one of the preceding claims, wherein the drive (22, 32) is a hydraulic cylinder, pneumatic cylinder or linear drive unit.

4. The device according to any one of the preceding claims, wherein the first bearing (14) and/or the second bearing (16) is/are rubberized.

5. The device according to any one of the preceding claims, wherein the first rolling element (18) and/or the second rolling element (20) is/are rubberized.

6. The device according to any one of the preceding claims, wherein the first bearing (14) and/or the second bearing (16) is/are a gear rack and the first rolling element (18) and/or the second rolling element (20) is/are a gear wheel.

7. The device according to any one of the preceding claims, wherein the blocking device of the first rolling element (18) comprises a free wheel.

8. The device according to any one of the preceding claims, wherein the blocking device of the second rolling element (20) comprises a free wheel.

9. The device according to any one of the preceding claims, wherein the identification objects (24) are supplied by a conveyor device (26).

10. The device according to any one of the preceding claims, wherein the device for holding the identification object (24) comprises two pairs of opposite rollers (30), which are adapted for resiliently receiving an identification object (24) therebetween.

11. The device according to any one of the preceding claims, wherein the first bearing (14) is arranged on the guide (12) in such a manner that the first rolling element (18) only contacts the first bearing (14) after the receiving device (10) has been moved from the initial position by a certain amount.

12. The device according to any one of the preceding claims, wherein the second bearing (16) is arranged on the guide (12) in such a manner that the second rolling element (20) only contacts the second bearing (16) after the receiving device (10) has been moved from the initial position by a certain amount.

13. The device according to any one of the preceding claims, wherein the first bearing (14) and/or the second bearing (16) is/are configured as a bar arranged on the guide (12) along the direction of movement of the receiving device (10).

14. The device according to any one of the preceding claims, wherein a distance between the first bearing (14) and the first rolling element (18) and/or a distance between the second bearing (16) and the second rolling element (20) is/are adjustable.

15. The device according to any one of the preceding claims, wherein the first (18) and the second rolling elements (20) have a common axis of rotation.

## Revendications

1. Dispositif de retournement d'objets d'identification (24), comprenant
un dispositif récepteur (10) pourvu d'un dispositif pour maintenir un objet d'identification (24), ce dispositif récepteur (10) pouvant être déplacé le long d'un élément de guidage (12) à partir d'une position de départ,
un premier support (14) qui est disposé sur ledit élément de guidage (12) dans le sens de déplacement du dispositif récepteur (10),
un premier élément de roulement (18) qui est monté mobile en rotation sur le dispositif récepteur (10), ce premier élément de roulement (18) présentant un dispositif de blocage qui n'autorise que dans une première direction une rotation du dispositif récepteur (10) au moyen du premier élément de roulement (18),
un système d'entraînement (22, 32) qui est conçu pour faire se déplacer le dispositif récepteur (10) le long de l'élément de guidage (12),
le premier élément de roulement (18) étant en appui sur le premier support (14) après le déplacement du dispositif récepteur (18) à partir de la position de départ, et le premier élément de roulement (18) effectuant une rotation dans la première direction lors d'un déplacement le long du premier support (14) au moyen du système d'entraînement (22, 32) et le dispositif récepteur (10) effectuant une rotation dans la première direction par le biais du premier élément de roulement (18), et le premier élément de roulement (18) effectuant une rotation dans une deuxième direction opposée à la première direction lors d'un déplacement inverse du dispositif récepteur (10) au moyen du système d'entraînement (22, 32), ledit dispositif de blocage empêchant alors une rotation du dispositif récepteur (10).

2. Dispositif selon la revendication 1, l'élément de guidage (12) présentant à hauteur du premier support (14) un deuxième support (16) placé avec un décalage en face du premier support (14), et le dispositif récepteur (10) présentant un second élément de roulement (20) lequel est monté mobile en rotation sur le dispositif récepteur (10), ce second élément de roulement (20) présentant un dispositif de blocage qui autorise uniquement une rotation dans la première direction du dispositif récepteur (10) au moyen du second élément de roulement (20).

3. Dispositif selon l'une des revendications précédentes, le système d'entraînement (22, 32) consistant en un cylindre hydraulique, un cylindre pneumatique ou un entraînement linéaire.

4. Dispositif selon l'une des revendications précédentes, le premier support (14) et/ou le second support (16) étant caoutchoutés.

5. Dispositif selon l'une des revendications précédentes, le premier élément de roulement (18) et/ou le second élément de roulement (20) étant caoutchoutés.

6. Dispositif selon l'une des revendications précédentes, le premier support (14) et/ou le second support (16) consistant en une crémaillère, et le premier élément de roulement (18) et/ou le second élément de roulement (18) consistant en une roue dentée.

7. Dispositif selon l'une des revendications précédentes, le dispositif de blocage du premier élément de roulement (18) présentant une roue libre.

8. Dispositif selon l'une des revendications précédentes le dispositif de blocage du second élément de roulement (20) présentant une roue libre.

9. Dispositif selon l'une des revendications précédentes, les objets d'identification (24) étant amenés par un dispositif de transport (26).

10. Dispositif selon l'une des revendications précédentes, le dispositif servant à maintenir l'objet d'identification (24) présentant deux paires de rouleaux (30) se faisant face, lesquels sont conçus pour recevoir élastiquement entre elles un objet d'identification (24).

11. Dispositif selon l'une des revendications précédentes, le premier support (14) étant disposé de telle manière sur l'élément de guidage (12) que le premier élément de roulement (18) est en appui sur le premier support (14) seulement après que le dispositif récepteur (10) a été déplacé sur une distance déterminée à partir de la position de départ.

12. Dispositif selon l'une des revendications précédentes, le second support (16) étant disposé de telle manière sur l'élément de guidage (12) que le second élément de roulement (20) est en appui sur le second support (16) seulement après que le dispositif récepteur (10) a été déplacé sur une distance déterminée à partir de la position de départ.

13. Dispositif selon l'une des revendications précédentes, le premier support (14) et/ou le second support (16) étant réalisés sous forme de listeau disposé sur l'élément de guidage (12), le long du sens de déplacement du dispositif récepteur (10).

14. Dispositif selon l'une des revendications précédentes, l'écartement entre le premier support (14) et le premier élément de roulement (18) et/ou l'écartement entre le second support (16) et le second élément de roulement (20) étant ajustables.

15. Dispositif selon l'une des revendications précédentes, le premier (18) et le second élément de roulement (20) présentant un axe de rotation commun.
